# EUROPÄISCHE PATENTANMELDUNG

(11) **EP 0 812 531 A1**
(43) Veröffentlichungstag der Anmeldung: **17.12.1997**
(21) Anmeldenummer: 97107620.3
(22) Anmeldetag: 09.05.1997
(51) Int. Cl.: A01D 78/10, A01B 73/06

(54) **Landmaschine mit einschwenkbarer grosser Arbeitsbreite**

(30) Priorität: 12.06.1996 DE 29610307 U
(71) Anmelder: Fella-Werke GmbH, D-90537 Feucht (DE)
(72) Erfinder: Kohl, Bernhard, 90537 Feucht (DE); Pürrer, Josef, 90537 Feucht (DE)
(74) Vertreter: Matschkur, Götz, Lindner Patent- und Rechtsanwälte

(57) **Zusammenfassung**

Landmaschine, insbesondere Kreiselzettwender mit großer Arbeitsbreite, z.B. sechs und mehr Arbeitskreisel, bei welcher Maschinenteile zur Verringerung der Transportbreite nach hinten eingeschwenkt werden können, wobei zur Entlastung der weit ausladenden Rahmenteile Verbindungsstreben (5,5',5'') zwischen einem Mittelteil und den schwenkbaren Rahmenteilen vorgesehen sind.

## Beschreibung

Die Erfindung bezieht sich auf eine Landmaschine, insbesondere Kreiselzettwender mit großer Arbeitsbreite, z.B. sechs und mehr Arbeitskreisel, bei welcher Maschinenteile zur Verringerung der Transportbreite nach hinten eingeschwenkt werden können.

Dem Strukturwandel der Landwirtschaft entsprechend werden heute und in Zukunft verstärkt Maschinen mit großer Arbeitsbreite gefordert. Zum Transport auf öffentlichen Straßen muß jedoch die Außenbreite dieser Maschinen auf die maximal zulässige Transportbreite von 3 m reduziert werden. Zur Lösung dieses Problems wird z.B. im Gebrauchsmuster 295 07 032 vorgeschlagen, die beiden Maschinenhälften für die Transportfahrt nach hinten zu schwenken. Dabei werden auch Mittel zur Bewerkstelligung des Umstellvorgangs und der Arretierung in den jeweils gewünschten Stellungen vorgeschlagen.

Wenn aber entsprechend der Forderung der Praxis die Arbeitsbreite eines derartigen Kreiselzettwenders durch Hinzufügen von weiteren zwei oder vier Kreiseln erhöht wird, entsteht eine Überbeanspruchung der Rahmen und Rahmengelenke sowie der Verstelleinrichtung.

Der Erfindung liegt daher die Aufgabe zugrunde, eine Landmaschine der eingangs genannten Art so auszugestalten, daß auch bei sehr breiten Anordnungen mit vielen Arbeitskreiseln eine Überbeanspruchung der Rahmen und Rahmengelenke vermieden ist.

Zur Lösung dieser Aufgabe ist erfindungsgemäß vorgesehen, daß zur Entlastung der weit ausladenden Rahmenteile Verbindungsstreben zwischen einem Mittelteil und den schwenkbaren Rahmenteilen vorgesehen sind.

Diese Verbindungsstreben, die bevorzugt gelenkig angeordnet sein können, können in einer ersten Ausgestaltung so ausgebildet sein, daß sie einseitig leicht gelöst werden können, um dann bevorzugt in an den schwenkbaren Rahmenteilen angebrachten Aufbewahrungen abgelegt und befestigt werden zu können, wenn sie beim Transport nicht benötigt werden.

Gemäß einer zweiten Ausführungsvariante der erfindungsgemäßen Anordnung sollen die Verbindungsstreben teleskopierbar sein und mit einer Arretiervorrichtung zueinander fixiert werden können.

Dabei kann zur Vereinfachung der Umstellung die Arretiervorrichtung eine Vorwähleinrichtung aufweisen, mit welcher jeweils die gewünschte Stellung 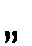 Öffnen" oder 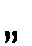 Schließen" vorwählbar ist, was in Weiterbildung der Erfindung sehr einfach dadurch realisierbar ist, daß am einen Teleskopabschnitt ein auf einen Flansch am Gegenteleskopteil aufhakbarer Verriegelungshaken gelagert ist, der über eine federbelastete umschaltbare Wippe, die wahlweise beidseits der Schwenkachse angreifen kann, in Schließ- bzw. Öffnungsstellung vorspannbar ist.

Schließlich liegt es auch im Rahmen der Erfindung, die Verbindungsstreben aus einem Seil oder einer Kette zu bilden, welche an einem Ende mit der Deichsel und am anderen Ende mit den seitlich ausladenden schwenkbaren Rahmenteilen mittels Spannhebeln verbunden sind. In der Spannstellung der Spannhebel sollen diese dabei in Arretierungen einrasten, wobei die Spannhebel darüber hinaus nach dem Lösen aus den Arretierungen entgegen der Kraft einer Feder derart bewegbar sind, daß sie beim Verbringen der Maschine von der Arbeits- in die Transportstellung den notwendigen Weg der Seile zulassen, diese jedoch unter geringer Spannung halten, so daß sie nicht durchhängen können.

Weitere Vorteile, Merkmale und Einzelheiten der Erfindung ergeben sich aus der nachfolgenden Beschreibung einiger Ausführungsbeispiele sowie anhand der Zeichnung. Dabei zeigen:
- Fig. 1: eine Aufsicht auf Mittelteil und die eine Hälfte eines erfindungsgemäß zusätzlich verstrebten Kreiselzettwenders mit insgesamt acht Arbeitskreisen, in der ausgefahrenen Arbeitsstellung,
- Fig. 2: eine Aufsicht auf den Kreiselzettwender nach Fig. 1 in der nach hinten eingeklappten Transportstellung,
- Fig. 3: eine der Fig. 1 entsprechende Teilaufsicht auf eine zweite Ausführungsform eines erfindungsgemäßen Kreiselzettwenders mit teleskopierbaren Verbindungsstreben,
- Fig. 4 und 5: vergrößerte Detailansichten der Arretiervorrichtung der teleskopierbaren Verbindungsstrebe in unterschiedlichen Positionen, und
- Fig. 6 und 7: den Figuren 1 und 2 entsprechende Aufsichten auf eine weitere Ausführungsform eines erfindungsgemäßen Kreiselzettwenders in Arbeits- bzw. Transportstellung.

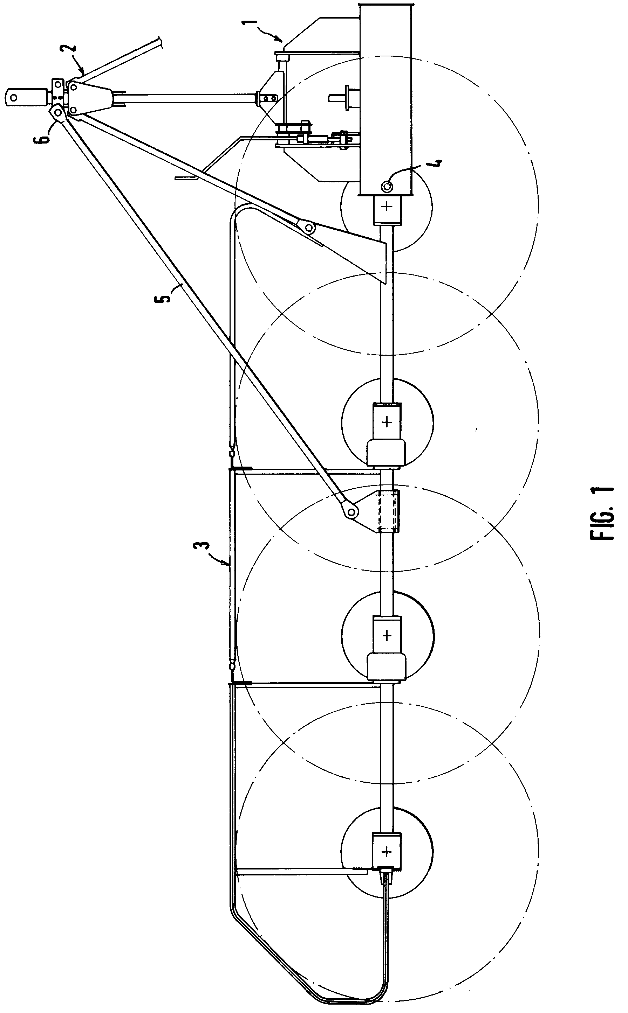

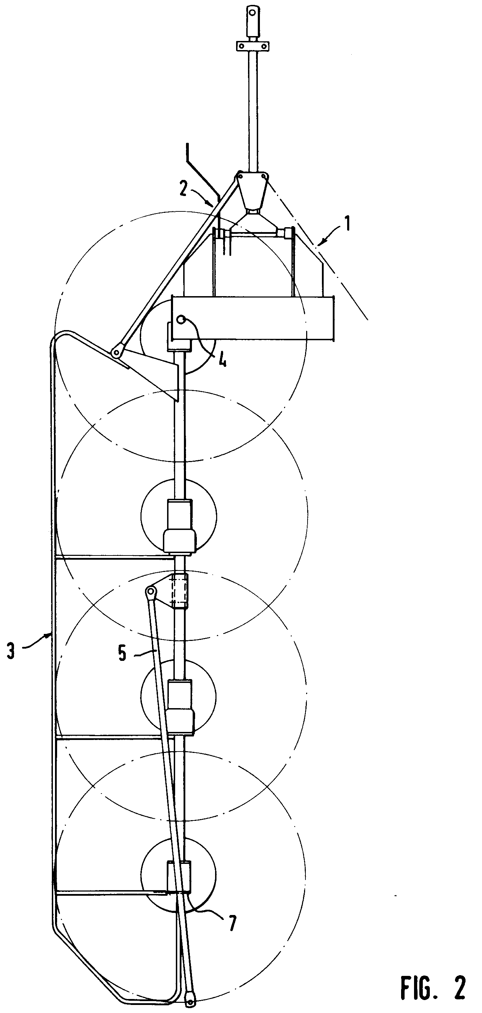

In den Figuren 1 und 2 erkennt man das Mittelteil 1 und die eine Hälfte eines symmetrisch gestalteten Turboheuers mit insgesamt acht Arbeitskreiseln in der Arbeitsstellung. Der Mittelteil 1 ist durch eine übliche Anhängevorrichtung 2 an einen Traktor od.dgl. anhängbar, wobei der Außenteil 3, umfassend die jeweils drei äußeren Arbeitskreisel auf jeder Seite des Turboheuers, um ein Gelenk 4 in die in Fig. 2 erkennbare Transportposition verschwenkt. Zur Stabilisierung und zur Entlastung der Gelenke ist erfindungsgemäß eine Verbindungsstrebe 5 - entsprechend eine gleichartige Strebe führt selbstverständlich zur nicht gezeigten anderen Hälfte des Turboheuers - vorgesehen, die beim Einschwenken in die Transportposition nach Fig. 2 am vorderen Ende 6 an der Deichsel ausgehängt und, wie in Fig. 2 erkennbar, in eine Aufnahmegabel 7 am einschwenkbaren Rahmenteil abgelegt wird.

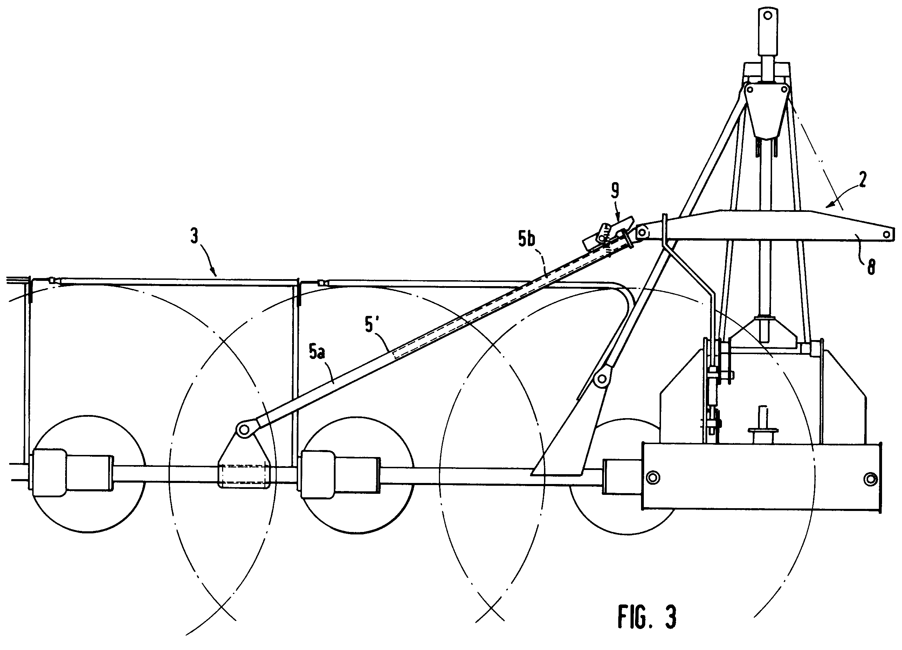

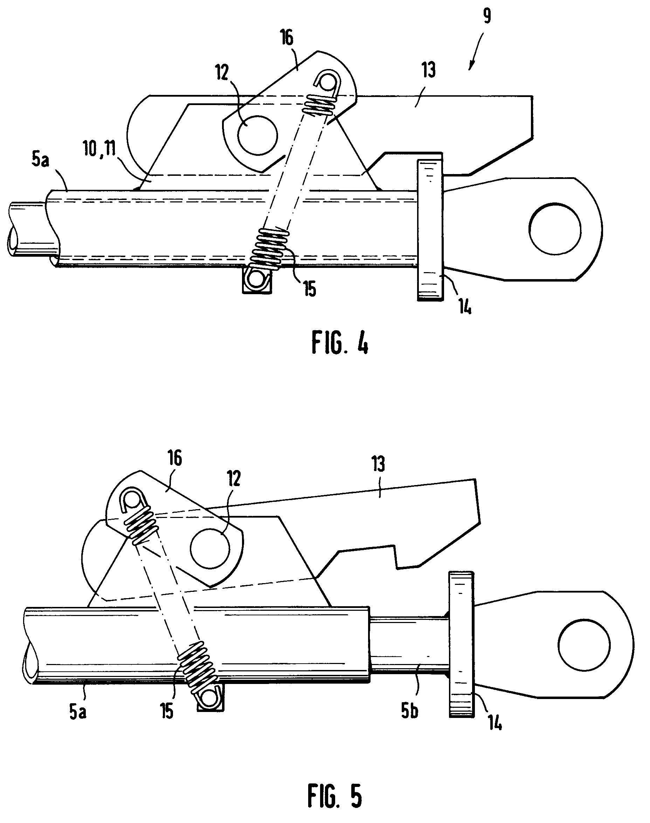

Bei der in den Figuren 3 bis 5 dargestellten Ausführungsform ist die Verbindungsstrebe 5' teleskopierbar ausgebildet, wobei der eine Teleskopabschnitt 5a mit dem verschwenkbaren Rahmenteil 3 und der ausziehbare Gegenteleskopabschnitt 5b mit dem Einhängeabschnitt 2, im vorliegenden Fall einem Querjoch 8, verbunden ist. Die beiden ineinandergeschobenen Stangenteile 5a und 5b können mit einer Arretiereinrichtung 9 fest verbunden werden. Die in Fig. 4 näher gezeigte Arretiereinrichtung besteht aus den auf den rohrförmigen Teleskopabschnitt 5a aufgeschweißten Lagerplatten 10, 11, aus dem zwischen den Lagerplatten mit dem Bolzen 12 gelagerten Verriegelungshaken 13 und dem mit dem ausziehbaren Teleskopstanenteil 5b verschweißten Flansch 14. Durch die Zugfeder 15 wird eine Wippe 16 vorgespannt, die wahlweise vor oder hinter dem durch den Bolzen 12 gebildeten Schwenkgelenk des Verriegelungshakens 13 angreifen kann, so daß sie entweder, wie in Fig. 4 gezeigt, den Verriegelungshaken in die Arretierstellung spannt oder aber ihn, wie inFig. 5 gezeigt, in die Öffnungsstellung vorspannt.

Vor dem Umstellvorgang von Arbeits- in Transportstellung werden nach Fig. 5 die Vorwahlwippen 16 umgelegt, wodurch die Verriegelungshaken 13 in Richtung Öffnen vorgespannt werden. Beim Umstellvorgang öffnen dann die Verriegelungshaken selbständig, sobald in den Verbindungsstreben 5' ein Lastwechsel auftritt.

Vor dem Umstellvorgang von Transport- in Arbeitsstellung werden die Vorwahlwippen wieder umgelegt, so daß die Verriegelungshaken in Arretierstellung vorgespannt sind und selbsttätig einrasten, sobald die Verbindungsstrebenteile 5a, 5b die Arbeitsstellung erreicht haben.

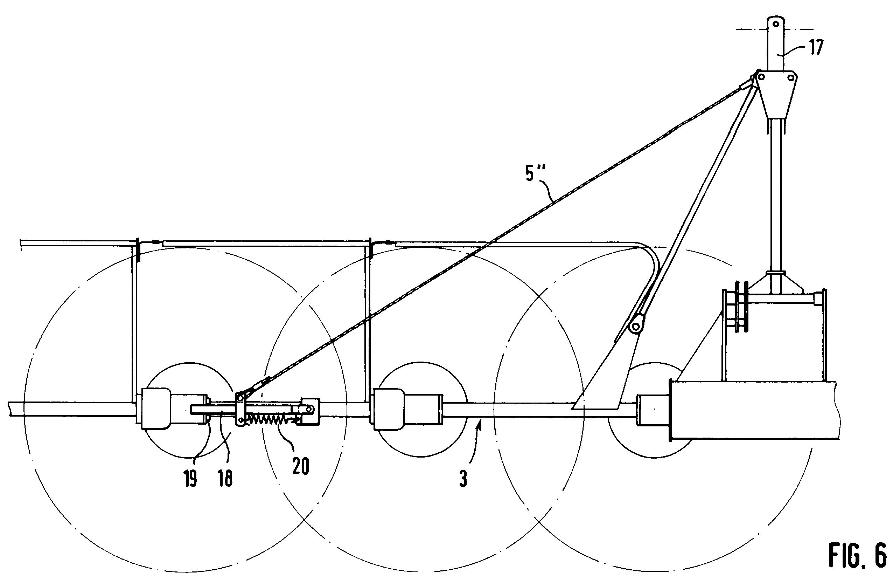

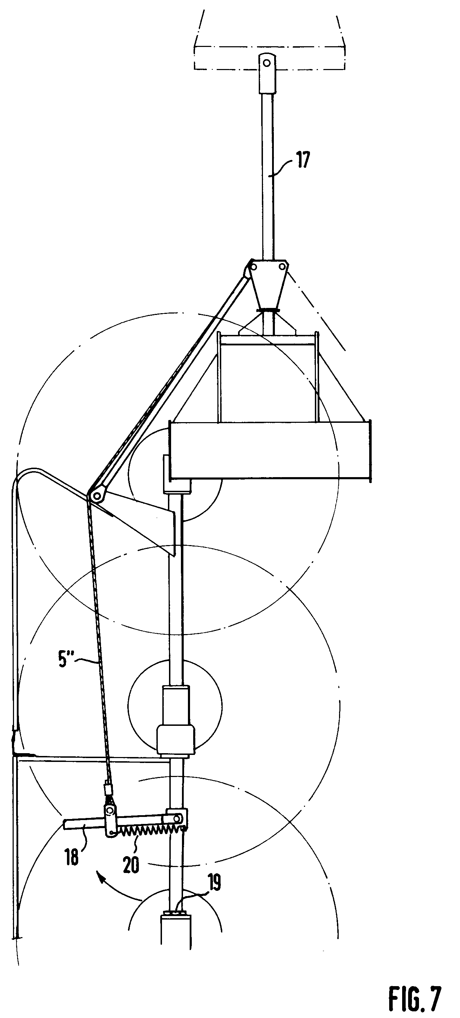

Die Figuren 6 und 7 zeigen ein weiteres Ausführungsbeispiel eines erfindungsgemäßen Kreiselzettwenders, bei welchem abweichend von den Figuren 1 und 2 die Verbindungsstreben aus einem Seil oder eine Kette 5'' gebildet sind, welche am einen Ende mit der Deichsel 17 und am anderen Ende mit den seitlich ausladenden schwenkbaren Rahmenteilen 3 mittels Spannhebeln 18 verbunden sind. In der in Fig. 6 dargestellten Arbeitsstellung rasten die Spannhebel in Arretierungen 19 ein. Die Spannhebel 19 stehen darüber hinaus unter der Wirkung von Spannfedern 20, gegen deren Spannwirkung sie nach dem Lösen aus den Arretierungen 20 derart bewegbar sind, daß sie beim Verbringen der Maschine von der Arbeitsstellung gemäß Fig. 6 in die Transportstellung nach Fig. 7 den notwendigen Weg der Seile zulassen, diese jedoch gleichwohl unter geringer Spannung halten, so daß sie nicht durchhängen können.

## Patentansprüche

1. Landmaschine, insbesondere Kreiselzettwender mit großer Arbeitsbreite, z.B. sechs und mehr Arbeitskreisel, bei welcher Maschinenteile zur Verringerung der Transportbreite nach hinten eingeschwenkt werden können, dadurch gekennzeichnet, daß zur Entlastung der weit ausladenden Rahmenteile Verbindungsstreben (5, 5') zwischen einem Mittelteil (1) und den schwenkbaren Rahmenteilen (3) vorgesehen sind.

2. Landmaschine nach Anspruch 1, dadurch gekennzeichnet, daß die Verbindungsstreben (5) gelenkig angeordnet sind.

3. Landmaschine nach Anspruch 1 und 2, dadurch gekennzeichnet, daß die Verbindungsstreben (5) einseitig leicht gelöst werden können.

4. Landmaschine nach einem der Ansprüche 1 bis 3, dadurch gekennzeichnet, daß die Verbindungsstreben (5) in an den schwenkbaren Rahmenteilen (3) angebrachten Aufbewahrungen (7) abgelegt und befestigt werden können.

5. Landmaschine nach Anspruch 1, dadurch gekennzeichnet, daß die Verbindungsstreben (5') teleskopierbar sind und mit einer Arretiervorrichtung (9) zueinander fixiert werden können.

6. Landmaschine nach Anspruch 5, dadurch gekennzeichnet, daß die Arretiervorrichtung eine Vorwähleinrichtung aufweist, mit welcher jeweils die gewünschte Stellung 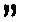 Öffnen" oder 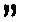 Schließen" vorwählbar ist.

7. Landmaschine nach Anspruch 6, dadurch gekennzeichnet, daß am einen Teleskopabschnitt (5a) ein auf einen Flansch (14) am Gegenteleskopteil (5b) aufhakbarer Verriegelungshaken (13) gelagert ist, der über eine federbelastete umschaltbare Vorwahlwippe (16), die wahlweise beidseits der Schwenkachse (12) angreifen kann, in Schließ- bzw. Öffnungsstellung vorspannbar ist.

8. Landmaschine nach Anspruch 1, dadurch gekennzeichnet, daß die Verbindungsstreben aus einem Seil oder Kette (5'') gebildet sind, welche an einem Ende mit der Deichsel (17) und am anderen Ende mit den seitlich ausladenden schwenkbaren Rahmenteilen (3) mittels Spannhebeln (18 verbunden sind.

9. Landmaschine nach Anspruch 1 und 8, dadurch gekennzeichnet, daß die Spannhebel (18) in einer Stellung, bei der in Arbeitsstellung der Maschine die Teile gespannt sind, in Arretierungen (19) einrasten.

10. Landmaschnine nach Anspruch 1, 8 und 9, dadurch gekennzeichnet, daß die Spannhebel (19) nach dem Lösen aus den Arretierungen (20) entgegen der Kraft einer Feder (21) derart bewegbar sind, daß sie beim Verbringen der Maschine von Arbeits- in Transportstellung den notwendigen Weg der Seile zulassen, diese jedoch unter geringer Spannung halten, so daß sie nicht durchhängen können.
